# EUROPEAN PATENT SPECIFICATION

(11) **EP 2 542 126 B1**
(45) Date of publication and mention of the grant of the patent: **07.05.2014**
(21) Application number: 10721131.0
(22) Date of filing: 01.03.2010
(51) Int. Cl.: A47J 31/20

(54) **HERBAL TEA MACHINE ELIMINATING SUDDEN VOLUMETRIC EXPANSION OF THE HERBAL TEA MIXTURE**
KRÄUTERTEEMASCHINE MIT ELIMINIERUNG DER PLÖTZLICHEN VOLUMETRISCHEN AUSDEHNUNG DER KRÄUTERTEEMISCHUNG
MACHINE À TISANE ÉLIMINANT L'EXPANSION SOUDAINE VOLUMÉTRIQUE DU MÉLANGE DE TISANE

(43) Date of publication of application: 09.01.2013
(73) Proprietor: Eksen Makine Sanayi ve Ticaret A.S., 41480 Kocaeli (TR)
(72) Inventor: TAHINCIOGLU, Besim, 41480 Kocaeli (TR)
(74) Representative: Sevinç, Erkan
(86) International application number: PCT/EP2010/052572
(87) International publication number: WO 2011/107142

(56) References cited:
- EP-A2- 0 074 108
- EP-A2- 2 103 234
- WO-A1-00/36956
- WO-A1-2009/109011
- WO-A2-99/48333
- FR-A1- 2 501 490
- FR-A1- 2 785 784
- GB-A- 2 412 555

## Description

### Technical Field of the Invention

The present invention relates to a tea machine specifically adapted for preparing herbal tea.

### Background of the Invention

Herbal teas such as raspberry leaves, hawthorn, valerian, stinging nettle, dandelion, elderflower, strawberry leaves, blackberry leaves and many others are widely consumed in the country of the applicant. Those are generally prepared in a non-automated fashion by simply boiling herbal tea leaves on fire in a pot. As in the case of Turkish coffee, which is prepared in a small long-handled pot called cezve, herbal teas too are usually prepared in a pot similarly having an open upper part. In the case of Turkish coffee, just as the coffee begins boiling, the pot is removed from the fire and the coffee is poured into the cups. Therefore foam of the coffee is maintained, which is said to be agreeable to the taste. Frothing occurs near boiling point and level of liquid in the pot raises to the point it can outflow from the pot.

What is said above for coffee also applies to herbal teas. As an herbal ingredient boiled in water in a pot will expand in volume, it should be watched to prevent outpouring. When keeping an eye on the range, one needs to either immediately turn off the range or take the pot out of the range during frothing and before overflowing.

The present invention provides an herbal tea machine having a heating arrangement intended to swiftly take the temperature of the herbal leaves water mixture near boiling temperature and then reduce transmitted energy to a predetermined level for preventing abrupt expansion in volume. Boiling occurring under reduced heat hence prevents overflowing due to frothing. The heating arrangement further provides the effect of maintaining the boiled herbal content warm.

The present invention further comprises means for lowering herbal ingredients into the water to improve infusion effect thereof.

Relevant prior art is disclosed in documents FR 2501490 A1, EP 2103234 A2, WO 2009/109011 A1 and FR 2785784 A1.

### Objects of the Invention

One of the objects of the present invention is to provide an herbal tea machine preventing sudden volumetric expansion of the herbal tea mixture in response to the degree of heat generated per second, i.e. power loss of the heat sources.

Another object of the present invention is to provide an herbal tea machine swiftly boiling the herbal tea mixture, preventing sudden volumetric expansion thereof and maintaining the boiled herbal content warm.

Another object of the present invention is to provide an herbal tea machine allowing users to displace filtering means so as to improve herbal tea infusion effect.

### Summary of the Invention

The present invention proposes an herbal tea machine having a reservoir for receiving herbal tea leaves and water mixture. Said reservoir is associated with an opening for introducing water and herbal ingredients. Said herbal tea machine comprises a heating arrangement for effecting boiling. To prevent overflowing due to frothing, heat transferred to the reservoir is reduced in the beginning of boiling and boiling occurs under reduced heat. The present invention further comprises means for lowering herbal ingredients into the water to improve infusion effect thereof.

### Brief Description of the Figures

Accompanying drawings are given solely for the purpose of exemplifying an herbal tea machine, which will be explained in detail hereinafter:

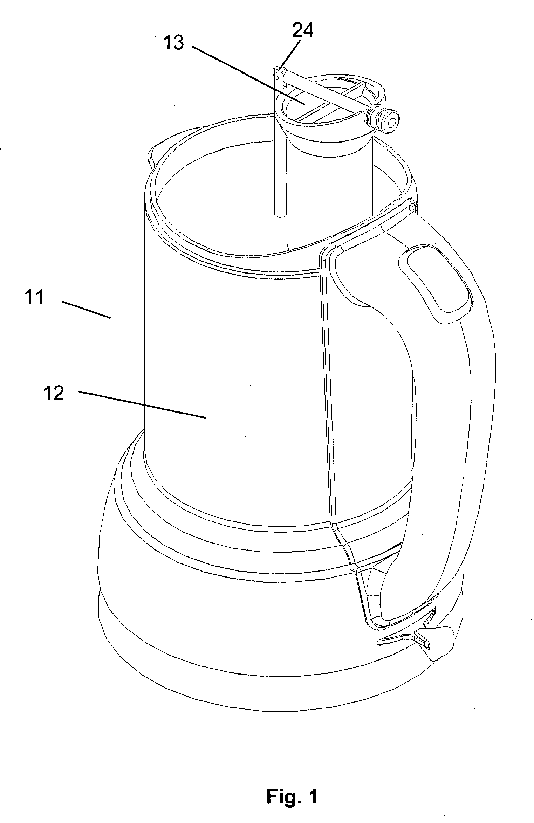

Fig. 1 demonstrates a perspective view of the herbal tea machine according to the present invention.

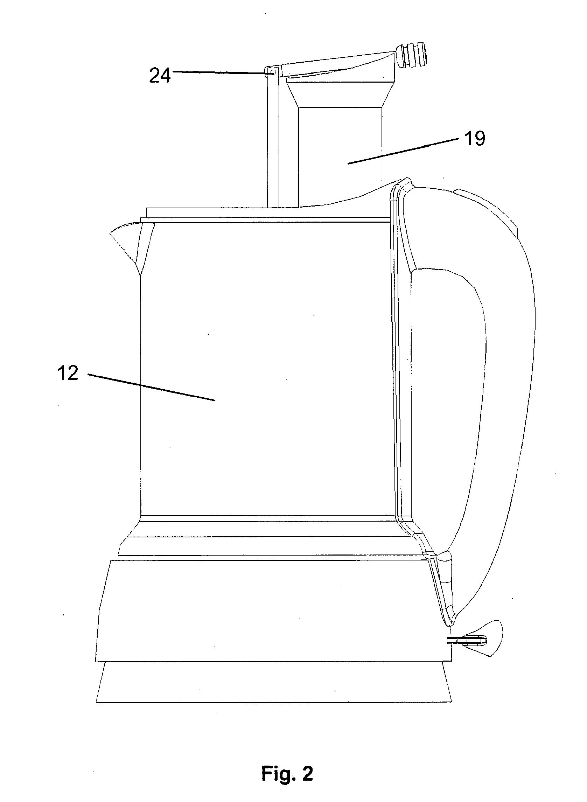

Fig. 2 demonstrates side view of the herbal tea machine according to the present invention.
Fig. 3 demonstrates cross-sectional side view of the herbal tea machine according to the present invention when the lower filtering means is lowered.

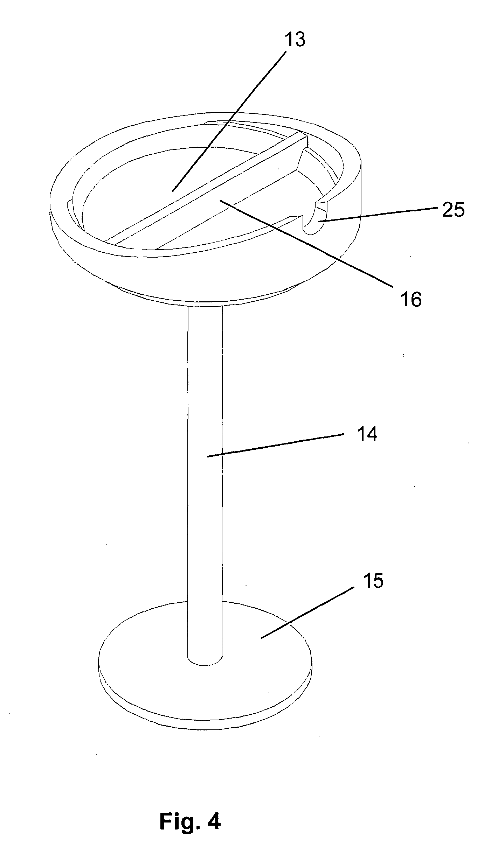

Fig 4 demonstrates a perspective view of the cap of the herbal tea machine according to the present invention.
Fig. 5 demonstrates cross-sectional side view of the herbal tea machine according to the present invention when both filtering means are lowered.
Fig 6 demonstrates a perspective view of the filtering means along with the cap according to the present invention.
Fig. 7 demonstrates cross-sectional side view of the herbal tea machine according to the present invention when both filtering means are raised.

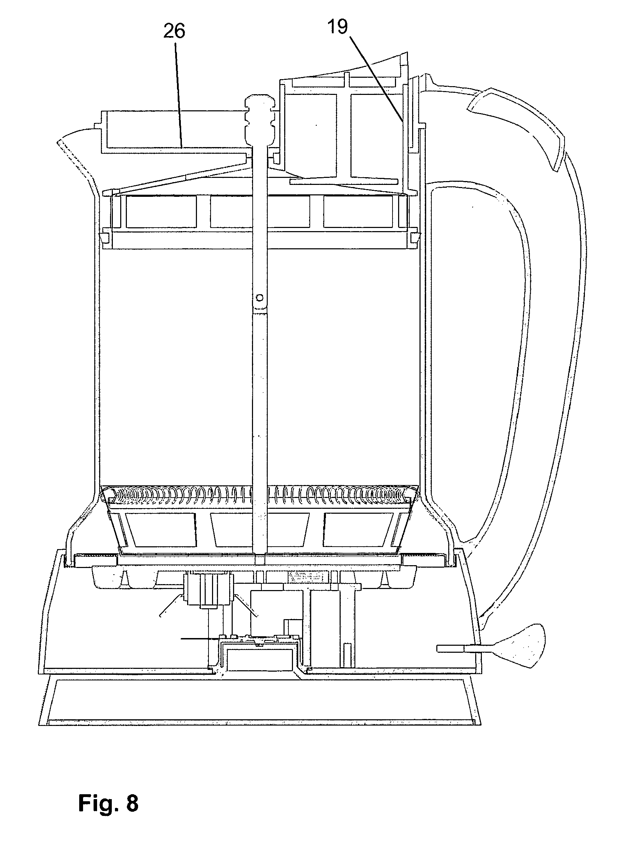

Fig. 8 demonstrates cross-sectional side view of the herbal tea machine having a fixed upper filtering means according to the present invention.
Fig. 9 demonstrates the electrical circuit of the herbal tea machine according to the present invention.

### Detailed Description of the Invention

The present invention proposes an herbal tea machine (11) having a reservoir (12) for receiving herbal tea leaves and water mixture. Said reservoir (12) is associated with an opening (21) for introducing water and herbal ingredients. Said reservoir (12) comprises a fixed upper part (26) incorporating said opening (21).

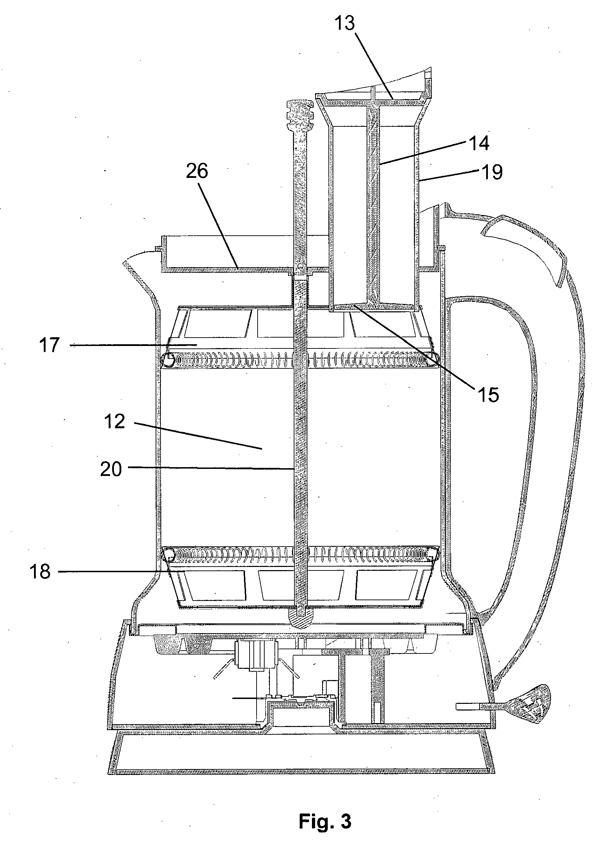

Said opening is designed to be closed by a circular removable cap (13) centrally connected at its lower surface to a rod (14) as shown in Fig. 3. Said rod (14) is linked at its other end to an upper filtering means cap (15) as explained below. Said cap (13) further has a diametric handling means (16) for tightening said cap (13).

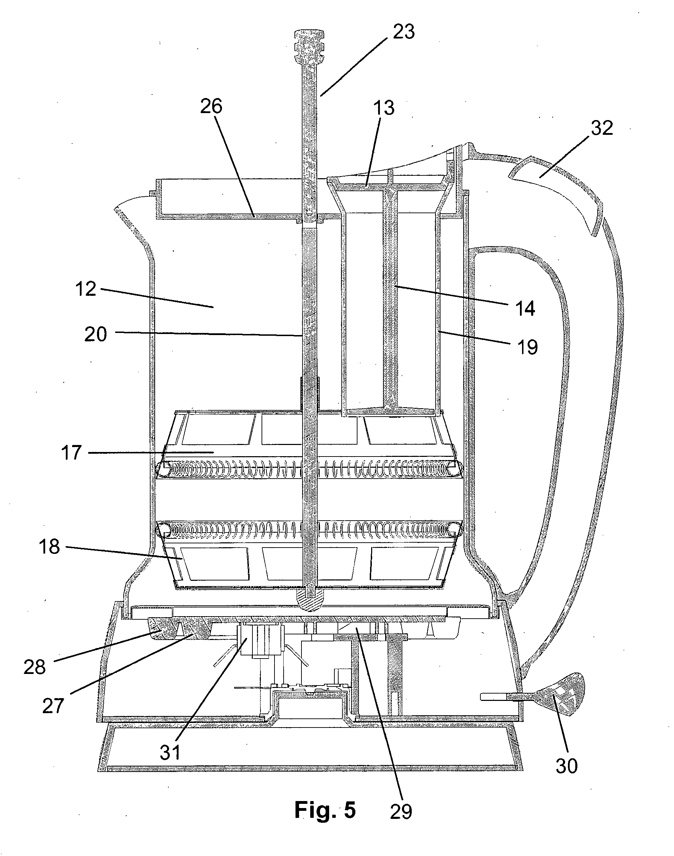

Said herbal tea machine comprises a pair of filtering means, namely upper and lower filtering means (respectively 17 and 18). The upper filtering means (17), which is guided on a common shaft (20), is an integral part of an inlet funnel (19) through which said cap (13) linked to said upper filtering means cap (15) is inserted. Said cap (13) therefore covers upper end of said funnel (19), the latter being movable into said reservoir (12) as shown in Fig. 5.

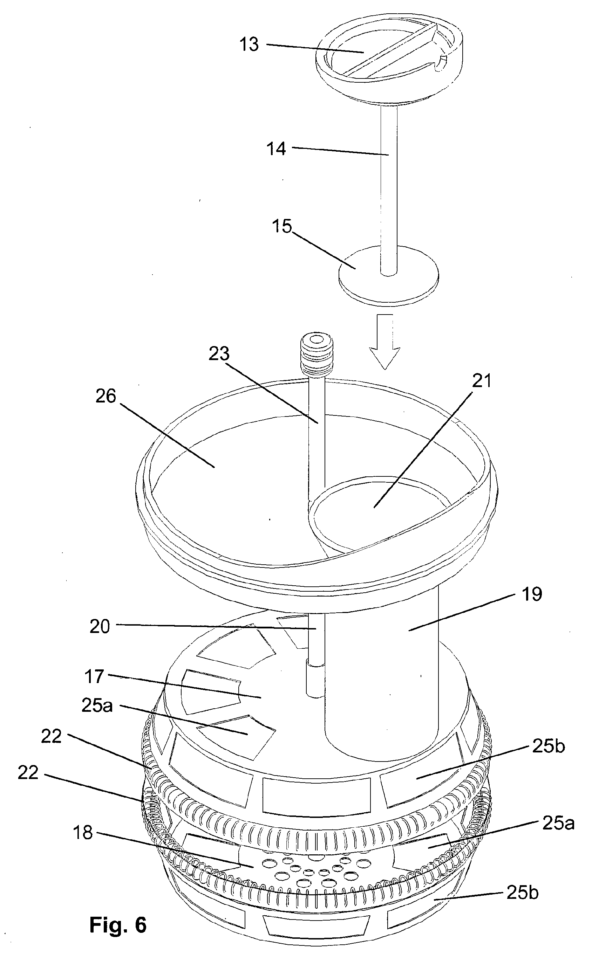

According to the present invention, said upper filtering means (17) is plungable on said common shaft (20) into said reservoir (12) for the purpose forcing herbal tea ingredients deeper to stimulate infusion effect thereof. Said upper (17) and lower (18) filtering means define an inner region reachable through an opening (21) at the upper end of said inlet funnel (19), said opening (21) being normally closed by said cap (13) as shown in Fig. 6. Herbal tea content hence filled through said inlet funnel (19) reaches said region being vertically delimited by said upper and lower filtering means (17 and 18). Herbal content may optionally be added initially or only after boiling, to be brewed.

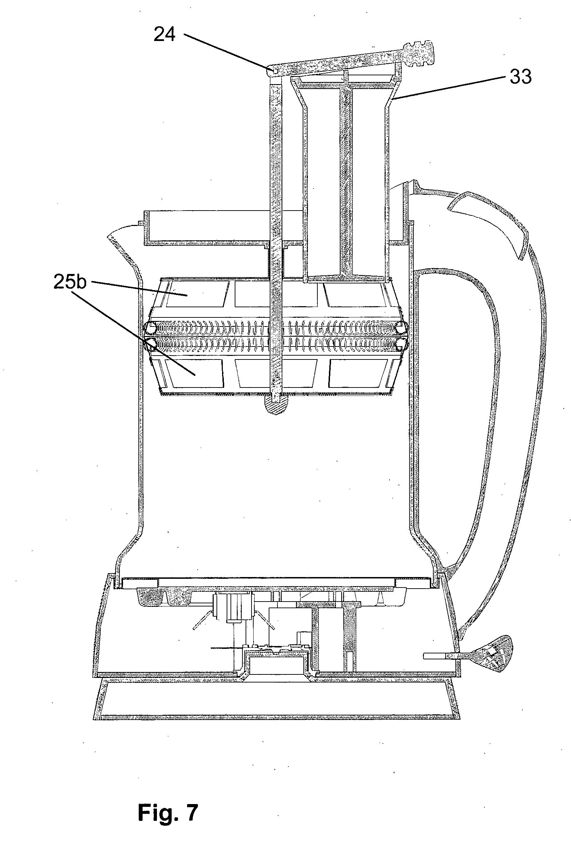

Both filtering means (17, 18) are designed in the form truncated cones having facing base parts along the perimeters of which an annular centering spring (22) is provided. Said centering springs (22) are flush with the inner surface of said reservoir (12) throughout displacement of said filtering means (17, 18). Said upper filtering means (17) being displaced by said cap (13) or diametric handling means (16) on said common shaft (20), said lower filtering means (18) is linked to said common shaft (20) to be movable up and down relative to said reservoir (12) by means of a plunging rod (23) directly linked with said common shaft (20) termination through a hinge (24) the latter providing rotation about an axis perpendicular to said common shaft (20). Said plunging rod (23) being bent around said hinge (24) over said cap (13) having a recess (24), locks said lower filtering means (18) in its raised position as shown in Fig. 7.

Said truncated cone-shaped filtering means (17, 18) comprises windows (25) both on the truncated surfaces and on the lateral surface of the truncated cones. Those windows are referred to as 25a and 25b respectively. All windows (25) in said filtering means (17, 18) are covered with wire mesh (not shown).

Said herbal tea machine (11) comprises a heating arrangement for effecting boiling. To prevent overflowing due to frothing, heat transferred to the reservoir (12) is reduced in the beginning of boiling and boiling occurs under reduced heat. Heating arrangement comprises a first and a second heating means (27 and 28). It further comprises a third heating means (29) in the form of a PTC resistance, which is operational during effective heating, boiling, continued boiling and keeping warm phases as explained below.

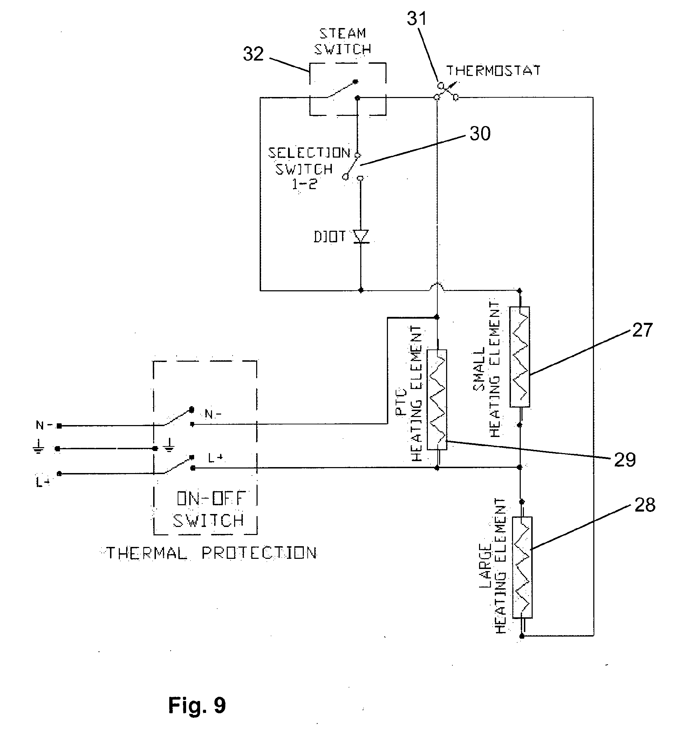

The first heating means (27) in a power range of kilowatts effectively heats the reservoir until the temperature reaches a certain point. A thermostat (31) is used to interrupt current flow through said first heating means (27) between 88-92° C before the boiling point and powers a second heating means (28) having a power range of approximately one third of that of said first heating means (27). Alternatively both heating means (27, 28) can operate up to the predetermined degree and then said second heating means (28) operates alone as in the circuit of Fig. 9. Said second heating means (28) is intended to effect boiling through lower power dissipation with respect to the first heating means (27), therefore reducing frothing effect of the herbal/water mixture and eliminating sudden volumetric expansion.

Upon boiling, a steam sensor (32, not explicitly shown in Fig. 5) typically arranged in the handle of the reservoir (12), either drops the power dissipated on said second heating means (28) to operate at half-wave and at half-power due to a diode or entirely cuts power feeding while said third heating means (29) still operating, the latter providing a much lower power dissipation. As PTC elements act as their own thermostats, they switch off the current when reaching their maximum temperature. A control switch (30) settable by the user determines whether said second heating means (28) at half power or said third heating means (29) at a much lower power will operate.

While said second heating means (28) at half power will provide continued boiling, said third heating means (29) operating at a much lower power will keep the herbal/water mixture warm, thereby brewing it slowly.

The upper and lower filtering means (17, 18) are both movable relative to said reservoir (12) according to the preferred embodiment of the present invention. However, it is possible that while said lower filtering means (18) is movable, said upper filtering means (17) is fixed. In this configuration, said upper filtering means (17) is given a cylindrical form instead of a truncated cone form. To this end, said inlet funnel (19) instead of a having radially enlarging upper part (33, Fig. 7) as with a movable upper filtering means (17) according to the preferred embodiment, is designed in the form of a merely cylindrical tubular body integral with said fixed upper part (26) of the reservoir (12).

In summary, the present invention proposes an herbal tea machine (11) comprising a reservoir (12) associated with an opening (21) for introducing water and herbal ingredients. Said reservoir (12) comprises a fixed upper part (26) incorporating said opening (21). Said herbal tea machine (11) further comprises a heating arrangement for boiling and brewing said herbal tea ingredients in said reservoir (12). Said heating arrangement comprises a first heating means (27) operable up to a predefined temperature of the drinkable mixture before the boiling temperature and a second heating means (28) operable to effect boiling through lower power dissipation with respect to said first heating means (27). Said heating arrangement further comprises a third heating means (29) operable upon boiling at a substantially lower power dissipation with respect to said second heating means (28). Said heating arrangement comprises a control means dropping power dissipation in said second heating means (28) to half-power upon boiling through a steam sensor (32)'s signal.

The heating principle of the present invention in which a first heating means (27) provides effective heating up to a predefined temperature before the boiling temperature, a second heating means (28) operable to effect boiling through lower power dissipation with respect to said first heating means (27) and a third heating means (29) for maintaining warmth upon boiling at substantially lower power dissipation with respect to said second heating means (28) can in principle be applied to any food processing utensil such as electrical pans, cooking pots, kettles, long-handled Turkish coffee cezves etc.

## Claims

1. An herbal tea machine (11) comprising a reservoir (12) associated with an opening (21) for introducing water and herbal ingredients, said reservoir (12) comprising a fixed upper part (26) incorporating said opening (21), said herbal tea machine (11) further comprising a heating arrangement for boiling and brewing said herbal tea ingredients in said reservoir (12) wherein said heating arrangement comprises a first heating means (27) providing effective heating operable up to a predefined temperature of a drinkable mixture before its boiling temperature and a second heating means (28) operable to effect boiling through lower power dissipation with respect to said first heating means (27), wherein power dissipation in said second heating means (28) is dropped upon boiling to half-power through a steam sensor (32)'s signal for providing continued boiling, and wherein said herbal tea machine (11) comprises a filtering means (18) being plungable into said reservoir (12) and defining an inner volume for receiving herbal ingredients.

2. An herbal tea machine (11) as set forth in Claim 1 wherein said heating arrangement comprises a third heating means (29) for maintaining warmth which is operable upon boiling at substantially lower power dissipation with respect to said second heating means (28).

3. An herbal tea machine (11) as set forth in Claim 1 wherein said filtering means (18) is linked to a common shaft (20) being in communication with a plunging rod (23) outside said reservoir (12) so as to control position of said filtering means (18) in said reservoir.

4. An herbal tea machine (11) as set forth in Claim 3 wherein said plunging rod (23) outside said reservoir (12) is bendable around a hinge (24) to be fixed for locking position of said filtering means (18).

5. An herbal tea machine (11) as set forth in Claim 3 or 4 wherein said common shaft (20) extends longitudinally in said reservoir (12) at a central position thereof.

6. An herbal tea machine (11) as set forth in Claim 3 or 5 wherein said filtering means (18) has a base along the perimeter of which an annular centering spring (22) is provided so as to be flush with the inner surface of said reservoir (12) throughout displacement of said filtering means (18).

7. An herbal tea machine (11) as set forth in Claim 1 or 6 wherein said herbal tea machine (11) comprises a second filtering means (17) defining an inner volume facing the inner volume defined by said first filtering means (18).

8. An herbal tea machine (11) as set forth in Claim 7 wherein said second filtering means (17) is integral with a fixed upper part (26) of the reservoir (12).

9. An herbal tea machine (11) as set forth in Claim 3 and 7 wherein said second filtering means (17) is guided on said common shaft (20) to be displaced by a cap (13) on an upper part (26) of said reservoir (12).

10. An herbal tea machine (11) as set forth in Claim 6 and 7 wherein said second filtering means (17) has a base along the perimeter of which an annular centering spring (22) identical to said centering spring (22) of said first filtering means (18) is provided in a manner facing the same.

11. An herbal tea machine (11) as set forth in Claim 7 or 10 wherein said filtering means (17, 18) are designed in the form of truncated cones having opposite truncated surfaces divided by the inner region defined by the two filtering means (17, 18).

12. An herbal tea machine (11) as set forth in Claim 9 and 11 wherein said second filtering means (17) is an integral part of an inlet funnel (19) on which said cap (13) is secured in the manner that said second filtering means (17) is movable into said reservoir (12) by means of said cap (13).

13. An herbal tea machine (11) as set forth in Claim 8 and 12 wherein said inlet funnel (19) connects an opening (21) on said upper part (26) to the inner volume of said second filtering means (18).

14. An herbal tea machine (11) as set forth in Claim 4 and 9 wherein said plunging rod (23) is secured to a recess (24) on said cap (13).

15. An herbal tea machine (11) as set forth in Claim 12 and 14 wherein said inlet funnel (19) has a radially enlarging upper part (33) for introducing water and herbal ingredients into said reservoir (12).

16. An herbal tea machine (11) as set forth in Claim 11 wherein said truncated cone-shaped filtering means (17, 18) comprises windows (25) both on the truncated surfaces and on the lateral surface of the truncated cones.

17. An herbal tea machine (11) as set forth in Claim 16 wherein said windows (25) in said filtering means (17, 18) are covered with wire mesh.

## Patentansprüche

1. Kräuterteemaschine (11) mit einem Behälter (12), der mit einer Öffnung (21) zum Einleiten von Wasser und Kräuterinhaltstoffen verbunden ist, wobei die Kräuterteemaschine (11) ein feststehendes oberes Teil (26) aufweist, das die Öffnung (21) enthält, und die Kräuterteemaschine (11) ferner eine Heizanordnung zum Sieden und Aufbrühen der Kräuterteeinhaltsstoffe in dem Behälter (12) aufweist, wobei die Heizanordnung ein erstes Heizmittel (27), das eine effektive Beheizung bereitstellt, welche bis zu einer vorbestimmten Temperatur einer trinkbaren Mischung vor deren Siedepunkt betriebsfähig ist, und ein zweites Heizmittel (28) aufweist, das betriebsfähig ist, um ein Sieden durch einen niedrigeren Leistungsverlust in Bezug auf das erste Heizmittel (27) zu bewirken, wobei der Leistungsverlust in dem zweiten Heizmittel (28) nach dem Sieden auf die halbe Leistung durch ein Signal eines Dampfsensors (32) zum Bereitstellen eines fortwährenden Siedens abgesenkt wird, und wobei die Kräuterteemaschine (11) ein Filtermittel (18) aufweist, das in den Behälter (12) eintauchbar ist und ein Innenvolumen zum Aufnehmen von Kräuterinhaltstoffen definiert.

2. Kräuterteemaschine (11) nach Anspruch 1, wobei die Heizanordnung ein drittes Heizmittel (29) zum Beibehalten von Wärme, das nach dem Sieden bei einem wesentlich niedrigeren Leistungsverlust in Bezug auf das zweite Heizmittel (28) betriebsfähig ist, aufweist.

3. Kräuterteemaschine (11) nach Anspruch 1, wobei das Filtermittel (18) mit einem gemeinsamen Schaft (20) verbunden ist, der mit einer Eintauchstange (23) außerhalb des Behälters (12) in Verbindung ist, um die Position des Filtermittels (18) in dem Behälter zu steuern.

4. Kräuterteemaschine (11) nach Anspruch 3, wobei die Eintauchstange (23) außerhalb des Behälters (12) um ein Scharnier (24) herum biegbar ist, um in Verriegelungsposition des Filtermittels (18) befestigt zu werden.

5. Kräuterteemaschine (11) nach Anspruch 3 oder 4, wobei sich der gemeinsame Schaft (20) längs in dem Behälter (12) bei einer zentralen Position hiervon erstreckt.

6. Kräuterteemaschine (11) nach Anspruch 3 oder 5, wobei das Filtermittel (18) eine Basis aufweist, entlang deren Umfang eine ringförmige Zentrierfeder (22) vorgesehen ist, um mit der inneren Oberfläche des Behälters (12) über die gesamte Versetzung des Filtermittels (18) bündig zu sein.

7. Kräuterteemaschine (11) nach Anspruch 1 oder 6, wobei die Kräuterteemaschine (11) ein zweites Filtermittel (17) aufweist, das ein Innenvolumen definiert, welches dem Innenvolumen gegenüberliegt, welches durch das erste Filtermittel (18) definiert wird.

8. Kräuterteemaschine (11) nach Anspruch 7, wobei das zweite Filtermittel (17) mit einem feststehenden oberen Teil (26) des Behälters (12) integral ist.

9. Kräuterteemaschine (11) nach Anspruch 3 und 7, wobei das zweite Filtermittel (17) auf dem gemeinsamen Schaft (20) geführt wird, um durch einen Deckel (13) auf einem oberen Teil (26) des Behälters (12) versetzt zu werden.

10. Kräuterteemaschine (11) nach Anspruch 6 und 7, wobei das zweite Filtermittel (17) eine Basis aufweist, entlang deren Umfang eine ringförmige Zentrierfeder (22), die identisch ist zu der Zentrierfeder (22) des ersten Filtermittels (18), auf eine Weise angeordnet ist, um derselbigen gegenüber zu liegen.

11. Kräuterteemaschine (11) nach Anspruch 7 oder 10, wobei die Filtermittel (17, 18) in der Form von Kegelstümpfen mit gegenüberliegenden angeschnittenen Oberflächen gestaltet sind, die durch den Innenbereich aufgeteilt sind, welche durch die beiden Filtermittel (17, 18) definiert werden.

12. Kräuterteemaschine (11) nach Anspruch 9 und 11, wobei das zweite Filtermittel (17) ein integrales Teil eines Einlassschachtes (19) ist, auf dem der Deckel (13) auf eine Weise befestigt ist, dass das zweite Filtermittel (17) in dem Behälter (12) mittels des Deckels (13) bewegbar ist.

13. Kräuterteemaschine (11) nach Anspruch 8 und 12, wobei der Einlassschacht (19) eine Öffnung (21) auf dem oberen Teil (26) mit dem Innenvolumen des zweiten Filtermittels (18) verbindet.

14. Kräuterteemaschine (11) nach Anspruch 4 und 9, wobei die Eintauchstange (23) an einer Vertiefung (24) auf dem Deckel (13) befestigt ist.

15. Kräuterteemaschine (11) nach Anspruch 12 und 14, wobei der Einlassschacht (19) ein sich radial vergrößerndes Teil (33) zum Einleiten von Wasser und Kräuterinhaltstoffen in den Behälter (12) aufweist.

16. Kräuterteemaschine (11) nach Anspruch 11, wobei die kegelstumpfförmigen Filtermittel (17, 18) Fenster (25) sowohl auf den angeschnittenen Oberflächen und auf der seitlichen Oberfläche der Kegelstümpfe aufweisen.

17. Kräuterteemaschine (11) nach Anspruch 16, wobei die Fenster (25) in den Filtermitteln (17, 18) mit Maschendraht bedeckt sind.

## Revendications

1. Machine à tisane (11) comprenant un réservoir (12) associé à une ouverture (21) pour introduire de l'eau et des ingrédients à base de plantes, ledit réservoir (12) comprenant une partie supérieure fixe (26) incorporant ladite ouverture (21), ladite machine à tisane (11) comprenant en outre un dispositif de chauffage pour porter à ébullition et brasser lesdits ingrédients de tisane dans ledit réservoir (12), dans lequel ledit dispositif de chauffage comprend des premiers moyens de chauffage (27) fournissant un chauffage efficace pouvant fonctionner jusqu'à une température prédéfinie d'un mélange buvable avant sa température d'ébullition et des deuxièmes moyens de chauffage (28) pouvant être actionnés pour effectuer l'ébullition à travers une dissipation de puissance inférieure par rapport auxdits premiers moyens de chauffage (27), dans lequel la dissipation de puissance dans lesdits seconds moyens de chauffage (28) chute lors de l'ébullition à mi-puissance à travers un signal de détecteur de vapeur (32) pour fournir une ébullition en continu, et dans lequel ladite machine à tisane (11) comprend des moyens de filtrage (18) étant enfichables dans ledit réservoir (12) et définissant un volume intérieur pour recevoir des ingrédients à base de plantes.

2. Machine à tisane (11) selon la revendication 1, dans laquelle ledit dispositif de chauffage comprend des troisièmes moyens de chauffage (29) pour le maintien de la chaleur qui peuvent être actionnés lors de l'ébullition à une dissipation de puissance sensiblement inférieure par rapport auxdits deuxièmes moyens de chauffage (28).

3. Machine à tisane (11) selon la revendication 1, dans laquelle lesdits moyens de filtrage (18) sont reliés à un arbre commun (20) étant en communication avec une tige plongeuse (23) à l'extérieur dudit réservoir (12) de manière à commander la position desdits moyens de filtrage (18) dans ledit réservoir.

4. Machine à tisane (11) selon la revendication 3, dans laquelle ladite tige plongeuse (23) à l'extérieur dudit réservoir (12) est pliable autour d'une charnière (24) à fixer pour verrouiller la position desdits moyens de filtrage (18).

5. Machine à tisane (11) selon la revendication 3 ou 4, dans laquelle ledit arbre commun (20) s'étend longitudinalement dans ledit réservoir (12) à une position centrale de celui-ci.

6. Machine à tisane (11) selon la revendication 3 ou 5, dans laquelle lesdits moyens de filtrage (18) comportent une base le long du périmètre pour laquelle un ressort à centrage annulaire (22) est prévu de manière à être en affleurement avec la surface intérieure dudit réservoir (12) tout au long de déplacement desdits moyens de filtrage (18).

7. Machine à tisane (11) selon la revendication 1 ou 6, dans laquelle ladite machine à tisane (11) comprend des seconds moyens de filtrage (17) définissant un volume intérieur en regard du volume intérieur défini par lesdits premiers moyens de filtrage (18).

8. Machine à tisane (11) selon la revendication 7, dans laquelle lesdits deuxièmes moyens de filtrage (17) sont solidaires d'une partie supérieure fixe (26) du réservoir (12).

9. Machine à tisane (11) selon les revendications 3 et 7, dans laquelle lesdits seconds moyens de filtrage (17) sont guidés sur ledit arbre commun (20) pour être déplacés par un capuchon (13) sur une partie supérieure (26) dudit réservoir (12).

10. Machine à tisane (11) selon les revendications 6 et 7, dans laquelle lesdits seconds moyens de filtrage (17) comportent une base le long du périmètre pour laquelle un ressort de centrage annulaire (22) identique audit ressort de centrage (22) desdits premiers moyens de filtrage (18) est prévu d'une manière à être tournée vers celui-ci.

11. Machine à tisane (11) selon les revendications 7 ou 10, dans laquelle lesdits moyens de filtrage (17, 18) sont conçus sous la forme de cônes tronqués ayant des surfaces tronconiques opposées divisées par la région intérieure définie par les deux moyens de filtrage (17, 18).

12. Machine à tisane (11) selon la revendication 9 et 11, dans laquelle lesdits seconds moyens de filtrage (17) sont une partie intégrante d'un entonnoir d'entrée (19) sur lequel ledit capuchon (13) est fixé de manière à ce que lesdits seconds moyens de filtrage (17) soient déplaçables dans ledit réservoir (12) par l'intermédiaire dudit capuchon (13).

13. Machine à tisane (11) selon les revendications 8 et 12, dans laquelle ledit entonnoir d'entrée (19) relie une ouverture (21) sur ladite partie supérieure (26) au volume interne desdits seconds moyens de filtrage (18).

14. Machine à tisane (11) selon les revendications 4 et 9, dans laquelle ladite tige plongeuse (23) est fixée à un évidement (24) sur ledit capuchon (13).

15. Machine à tisane (11) selon les revendications 12 et 14, dans laquelle ledit entonnoir d'entrée (19) a une partie supérieure qui s'agrandit radialement (33) pour introduire de l'eau et des ingrédients à base de plantes dans ledit réservoir (12).

16. Machine à tisane (11) selon la revendication 11, dans laquelle lesdits moyens de filtrage en forme de cônes tronqués (17, 18) comprennent des fenêtres (25) à la fois sur les surfaces tronconiques et sur la surface latérale des cônes tronqués.

17. Machine à tisane (11) selon la revendication 16, dans laquelle lesdites fenêtres (25) dans lesdits moyens de filtrage (17, 18) sont recouvertes par un treillis métallique.
